# EUROPEAN PATENT APPLICATION

(11) **EP 3 459 999 A1**
(43) Date of publication of application: **27.03.2019**
(21) Application number: 17824233.5
(22) Date of filing: 04.07.2017
(51) Int. Cl.: C08L 23/22, B29C 33/40, B29C 35/02, B60C 5/14, C08K 5/098, C08K 5/20, C08L 101/00

(54) **RUBBER COMPOSITION**

(30) Priority: 04.07.2016 JP 2016132561
(71) Applicant: Sumitomo Rubber Industries, Ltd., Kobe-shi, Hyogo 651-0072 (JP)
(72) Inventor: MIYAZAKI, Tatsuya, Kobe-shi Hyogo 651-0072 (JP)
(74) Representative: Manitz Finsterwald Patent- und Rechtsanwaltspartnerschaft mbB
(86) International application number: PCT/JP2017/024472
(87) International publication number: WO 2018/008630

(57) **Abstract**

A rubber composition comprising: 0.1 to 10 parts by mass of ω-9 fatty acid amide and/or stearamide and 0.1 to 100 parts by mass of a resin based on 100 parts by mass of a rubber component comprising not less than 80% by mass of a butyl rubber, wherein the rubber composition comprises the ω-9 fatty acid amide and/or stearamide as a mixture of 20 to 80% by mass of ω-9 fatty acid amide and/or stearamide and 20 to 80% by mass of a metal salt of stearic acid or hydroxystearic acid.

## Description

### TECHNICAL FIELD

The present invention relates to a rubber composition comprising a rubber component, fatty acid amide and a resin.

### BACKGROUND OF THE INVENTION

So far rubber products such as tires and a vulcanization bladder have been produced by vulcanizing an unvulcanized rubber composition obtained by kneading compounding components. While the vulcanizing is conducted by heating and pressurizing with an outer frame metal mold and a vulcanization bladder or a metal core from the inside, if excessive adhesion of the rubber composition to the vulcanization metal mold occurs, it may result in rejected products, a decreased durability life or occurrence of contamination of the metal mold.

In a rubber composition comprising a large amount of a butyl rubber component, a high air tightness, an air holding property and surface smoothness are secured by allowing the rubber composition to comprise a process oil and a resin component. In particular in a rubber composition for a vulcanization bladder, a process oil and a crosslinking resin are used. Therefore, there is a problem that excessive adhesion of the rubber composition to a vulcanization metal mold and a processing apparatus is easy to arise.

Further, by allowing a rubber composition for tire interior members including a rubber for an innerliner to comprise a natural rubber, a process oil, a resin and a compatible resin, bonding to an adjacent member is secured. Therefore, there is a problem that excessive adhesion of the rubber composition to a vulcanization metal mold and a processing apparatus is easy to arise.

In order to solve these problems, there is a method of compounding a mold releasing agent. However, if lubricity to be imparted to a rubber composition, inhibition of blooming on a rubber surface and dispersibility of a filler are not satisfactory, there is a problem that an effect of inhibiting minor defects (such as bare) of a vulcanized product and durability are lowered.

Patent Document 1 describes a rubber composition assuring that by compounding a given mold releasing agent, releasing from a metal mold is controlled and contamination of a metal mold is inhibited while maintaining abrasion resistance and wet grip performance.

### Patent Document

Patent Document 1: JP 2015-232110 A

### SUMMARY OF THE INVENTION

### PROBLEM TO BE SOLVED BY THE INVENTION

In Patent Document 1, a rubber composition for a bladder and rubber compositions for tire interior members are not considered. Further, improvement of dispersibility of a filler and enhancement of tire performance by means of a mold releasing agent are not taken into consideration.

An object of the present invention is to provide a rubber composition being good in processability, mold release characteristics and durability.

### MEANS TO SOLVE THE PROBLEM

It was found that dispersion of a filler in a rubber composition is improved and rubber characteristics are enhanced by compounding a predetermined fatty acid amide and resin, and thus the present invention has been completed.

Namely, the present invention relates to a rubber composition comprising 0.1 to 10 parts by mass of ω-9 fatty acid amide and/or stearamide and 0.1 to 100 parts by mass of a resin based on 100 parts by mass of a rubber component comprising not less than 80% by mass of a butyl rubber, wherein the rubber composition comprises the ω-9 fatty acid amide or stearamide as a mixture of 20 to 80% by mass of ω-9 fatty acid amide and/or stearamide and 20 to 80% by mass of a metal salt of stearic acid or hydroxystearic acid.

Further, the present invention relates to an interior member of a tire and a bladder for tire vulcanization or tire molding composed of the rubber composition.

It is preferable that the rubber composition comprises a resin having a softening point of 130°C or lower and at least one of a process oil and a liquid polymer, wherein a total content of the resin having a softening point of 130°C or lower, the process oil and the liquid polymer is not less than 10 parts by mass.

It is preferable that the rubber composition comprises not less than 4 parts by mass of the process oil, from a point that an effect of the present invention can be exhibited more.

### EFFECT OF THE INVENTION

The rubber composition of the present invention comprising predetermined amounts of ω-9 fatty acid amide and/or stearamide and a resin based on 100 parts by mass of a rubber component comprising not less than 80% by mass of a butyl rubber is good in processability, mold release characteristics and durability.

### EMBODIMENT FOR CARRYING OUT THE INVENTION

The rubber composition according to the embodiment of the present disclosure comprises the rubber component, a mixture of ω-9 fatty acid amide and/or stearamide and a metal salt of stearic acid or hydroxystearic acid and the resin.

### <Rubber component>

Butyl rubbers are suitably used as the rubber component used in the embodiment of the present disclosure. Examples of butyl rubbers include butyl rubbers (non-halogenated butyl rubbers, IIR), halogenated butyl rubbers (X-IIR) such as brominated butyl rubber (Br-IIR) and chlorinated butyl rubber (Cl-IIR), a copolymer of isobutylene and p-alkylstyrene (for example, Exxpro3035 available from Exxon Mobil Corporation), a halide of the copolymer and the like. Non-halogenated butyl rubbers (IIR) are preferable since these have high heat resistance. These butyl rubbers may be used alone or may be used in combination of two or more thereof.

A content of isoprene in the non-halogenated butyl rubber is preferably not more than 3 mole %, more preferably not more than 2 mole % for the reason that an effect of enhancing heat resistance is satisfactory. On the other hand, the content of isoprene in the non-halogenated butyl rubber is preferably not less than 0.5 mole %, more preferably not less than 0.7 mole %, further preferably not less than 1.0 mole %.

A ratio of double bonds in a butyl rubber is usually 0.5% or less, and even if crosslinking is conducted, the degree of crosslinkings is extremely small. A butyl rubber can be usually prepared by mixing isobutylene and an isoprene monomer and reacting them with each other.

A ratio of the butyl rubber in a total amount of the rubber components (a total content when two or more butyl rubbers are used) is preferably not less than 80% by mass, more preferably not less than 90% by mass, further preferably not less than 92% by mass, most preferably 100% by mass.

The rubber component used in the embodiment of the present disclosure besides butyl rubbers is not limited particularly, and examples thereof include diene rubbers such as isoprene rubbers including natural rubber (NR) and polyisoprene rubber (IR), styrene-butadiene copolymer rubber (SBR), styrene-isoprene-butadiene copolymer rubber (SIBR), chloroprene rubber (CR) and acrylonitrile-butadiene copolymer rubber (NBR). These rubber components may be used alone or may be used in combination of two or more thereof.

From the viewpoint of durability of the rubber composition for a bladder, it is preferable that the rubber composition according to the embodiment of the present disclosure comprises a butyl rubber and a chloroprene rubber, more preferably a rubber component consisting of a chloroprene rubber and a butyl rubber. It is further preferable that the butyl rubber is a regular butyl rubber (a non-halogenated butyl rubber).

### <Fatty acid and resin>

The rubber composition according to the embodiment of the present disclosure is featured by comprising 0.1 to 10 parts by mass of ω-9 fatty acid amide (omega9 fatty acid amide) and/or stearamide and 0.1 to 100 parts by mass of a resin based on 100 parts by mass of a rubber component. By combination use of ω-9 fatty acid amide or stearamide and a resin, excessive adhesion of the rubber composition onto an apparatus such as a kneader or a vulcanization metal mold is inhibited and the rubber composition having good processability and mold release characteristics is obtained irrespective of good durability.

"ω-9 fatty acid" means a fatty acid having a double bond at the 9th carbon from the terminal of carboxylic acid. Further, "ω-9 fatty acid amide" means a compound obtained by replacing hydroxyl of ω-9 fatty acid with amino. Preferred is ω-9 fatty acid amide having 18 to 24 carbon atoms.

Examples of ω-9 fatty acid amide include oleamide, eicosenoic acid amide, mead acid amide, erucamide and nervonic acid amide, and oleamide and erucamide are preferable. Here, the fatty acid amide according to the embodiment of the present disclosure differs in a chemical structure from fatty acid monoethanolamide and esters of fatty acid monoethanolamide contained in a mold release agent (WB16 available from Structol GmbH or the like), and is suitable in an SP value. Specifically the fatty acid amide according to the embodiment of the present disclosure (for example, an SP value of oleamide is 10.2) has an SP value close to an SP value of a resin usually used for a rubber composition in a tire industry (generally an SP value of 8 to 11 (for example, an SP value of a terpene resin is around 8.3, and an SP value of a phenolic resin is around 10.5)) and is good in compatibility therewith. In addition, the fatty acid amide according to the embodiment of the present disclosure has a proper difference in an SP value (a difference in an SP value is about 2.4) from a rubber component usually used for a rubber composition in a field of a tire (an SP value is generally 7.8 to 9 (for example, an SP value of a butyl rubber is around 7.8)), and as a result, bleeding is easy to occur, thus exhibiting mold release characteristics.

While an unvulcanized rubber composition comprising a predetermined amount of a resin has a low viscosity, ω-9 fatty acid amide forms a thin amide bond film on a metal surface of an apparatus, thereby inhibiting the resin from strongly bonding to the metal surface. Thus, it can be considered that excessive adhesion of the rubber composition onto an apparatus such as a kneader or a vulcanization metal mold is inhibited.

It is preferable that the rubber composition comprises ω-9 fatty acid amide and/or stearamide as a mixture of ω-9 fatty acid amide and/or stearamide and a metal salt of stearic acid or hydroxystearic acid. It can be considered that when the rubber composition comprises ω-9 fatty acid amide and/or stearamide as a molten mixture of ω-9 fatty acid amide and/or stearamide and a metal salt of stearic acid or hydroxystearic acid, physical mold release characteristics are enhanced, and synergistic action of the physical mold release characteristics and the mold release characteristics by the amide bond film occurs, thereby exhibiting a further effect of the present invention. The ω-9 fatty acid amide and stearamide may be used alone, and may be used in combination of two or more thereof, and use of one of ω-9 fatty acids is preferable and single use of oleamide is more preferable.

The above-mentioned mixture may be a simple mixture at normal temperature or a molten mixture, and the simple mixture is preferable so that a metal salt of stearic acid or hydroxystearic acid is not dissolved in the rubber component and exhibits physical mold release characteristic as a foreign matter.

The molten mixture can be prepared by heating, for example, oleamide (a transparent melting point: 74°C) and calcium stearate (a transparent melting point: 154°C) up to the melting temperatures thereof while mixing the both compounds. This mixing method is not limited particularly, and there is, for example, a method of stirring the compounds with a stirrer in a silicon oil bath while heating them.

It is preferable that the mixture comprises 20 to 80% by mass of ω-9 fatty acid amide and/or stearamide and 20 to 80% by mass of a metal salt of stearic acid or hydroxystearic acid; more preferably 25 to 75% by mass of ω-9 fatty acid amide and/or stearamide and 25 to 75% by mass of a metal salt of stearic acid or hydroxystearic acid; further preferably 40 to 60% by mass of ω-9 fatty acid amide and/or stearamide and 40 to 60% by mass of a metal salt of stearic acid or hydroxystearic acid.

Examples of "the metal salt of stearic acid or hydroxystearic acid" include calcium stearate, calcium hydroxystearate, aluminum stearate, magnesium stearate, sodium stearate, zinc stearate and the like; and calcium stearate, calcium hydroxystearate and aluminum stearate are preferable; and calcium stearate and calcium 12-hydroxystearate are more preferable.

A content of the ω-9 fatty acid amide and/or stearamide is not less than 0.1 part by mass, preferably not less than 0.2 part by mass, more preferably not less than 0.3 part by mass based on 100 parts by mass of the rubber component. On the other hand, the content of the ω-9 fatty acid amide and/or stearamide is not more than 10 parts by mass, preferably not more than 8 parts by mass, more preferably not more than 5 parts by mass based on 100 parts by mass of the rubber component. The above-mentioned part(s) by mass means part(s) by mass of the ω-9 fatty acid amide and/or stearamide but not part(s) by mass of the mixture of the ω-9 fatty acid amide and/or stearamide and the metal salt of stearic acid or hydroxystearic acid.

Examples of the resin include adhesive resins, crosslinking resins and compatible resins. These resins may be used alone or may be used in combination of two or more thereof.

Among the adhesive resins, there are resins for the purpose of imparting an adhesive property at the time of rubber processing and lamination of rubbers, and resins for the purpose of enhancing an adhesive grip property with a road surface during running . Examples of the adhesive resin include a phenolic resin, a coumarone-indene resin, a terpene resin, a styrene resin, an acrylic resin, a rosin resin, a dicyclopentadiene resin (DCPD resin) and the like. Examples of the phenolic resin include Koreshin (available from BASF Japan), TACKIROL (available from Taoka Chemical Co., Ltd.) and the like. Examples of coumarone-indene resin include Esukuron (available from Nippon Steel & Sumikin Chemical Co., Ltd.), Neopolymer (available from JXTG Nippon Oil & Energy Corporation) and the like. Examples of a styrene resin include Sylvatraxx 4401 (available from Arizona Chemical Company, LLC) and the like. Examples of a terpene resin include TR7125 (available from Arizona Chemical Company, LLC), TO125 (available from Yasuhara Chemical Co., Ltd.) and the like. These resins may be used alone or may be used in combination of two or more thereof. Among these, from the viewpoint of good durability, a phenolic resin, a coumarone-indene resin, a terpene resin and an acrylic resin are preferable and a terpene resin is more preferable.

Among the terpene resins, preferred are hydrogenated terpene resins for the reason that these resins are good in compatibility with a butyl rubber component and a vulcanization bladder having better durability can be obtained since a double bond in a chemical structure thereof has become a single bond by hydrogenation. Further, for the reason that nearly 100% hydrogenation is possible and durability is good, hydrogenated polyterpene resins are more preferred. Examples of the hydrogenated polyterpene resins include CLEARON P Series (available from Yasuhara Chemical Co., Ltd.) and the like. Hydrogenation treatment of terpene resins can be carried out by a known method, and in this embodiment, commercially available hydrogenated terpene resins can also be used.

The crosslinking resins are compounded for the purpose of crosslinking mainly a butyl rubber component. Examples of the crosslinking resins include an alkylphenol formaldehyde resin (TACKIROL 201 available from Taoka Chemical Co., Ltd.) and the like.

The compatible resins are compounded for the purpose of enhancing compatibility between the rubber components and between the rubber component and the filler. Examples of the compatible resins include STRUKTOL 40MS manufactured by Struktol GmbH, Rhenosin 145A manufactured by Rhein Chemie Corp., Promix 400 manufactured by Flow Polymers Inc. and the like.

A softening point of the resin is preferably 0°C or higher from the viewpoint of durability. On the other hand, the softening point of the resin is preferably 170°C or lower, more preferably 160°C or lower, still more preferably 145°C or lower, further preferably 130°C or lower. In the present disclosure, the softening point of the resin is one specified in JIS K6220-1: 2001 and is a temperature at the time when the ball has dropped on a bottom plate in the measurement with the ring and ball softening point measuring device.

A glass transition temperature (Tg) of the resin is preferably -35°C or higher, more preferably 30°C or higher from the viewpoint of compatibility with the rubber component. On the other hand, the Tg of the resin is preferably 110°C or lower, more preferably 100°C or lower from the viewpoint of compatibility with the rubber component.

A content of the resin based on 100 parts by mass of the rubber component is not less than 0.1 part by mass, preferably not less than 1.0 part by mass, more preferably not less than 2.0 parts by mass. When the content of the resin is less than 0.1 part by mass, there is a tendency that an effect of improving adhesion to adjacent members and durability becomes insufficient. On the other hand, the content of the resin is not more than 100 parts by mass, preferably not more than 80 parts by mass, more preferably not more than 70 parts by mass. When the content of the resin is more than 100 parts by mass, there is a tendency that the Tg of the rubber composition becomes high and the Hs at low temperature becomes high, thereby deteriorating durability.

It is preferable that the rubber composition comprises the resin having a softening point of 130°C or lower. The adhesive resin having a softening point of 130°C or lower is not limited particularly, and examples thereof include resins having been used for rubber products such as tires. It is noted that the resin having a softening point of 130°C or lower includes a liquid resin such as NOVARES C10 manufactured by Ruetgers Chemicals.

When the rubber composition comprises the resin having a softening point of 130°C or lower, a content thereof based on 100 parts by mass of the rubber component is preferably not less than 1 part by mass, more preferably not less than 2 parts by mass for the reason that excessive adhesion of the rubber composition to a rubber processing apparatus and a vulcanization metal mold is inhibited and an effect of the present invention can be exhibited more. On the other hand, the content of the resin is preferably not more than 100 parts by mass, more preferably not more than 90 parts by mass from the viewpoint of durability.

In addition to the above-mentioned components, the rubber composition according to the embodiment of the present disclosure can adequately comprise compounding agents having been generally used for manufacturing a rubber composition, for example, oil, a liquid polymer, a reinforcing filler, zinc oxide, stearic acid, palmitic acid, lauric acid, fatty acid zinc soap, an antioxidant, wax, a vulcanizing agent, a vulcanization accelerator and the like.

Oil is not limited particularly, and examples thereof include paraffin oils such as process oil and mineral oil, TDAE oil, castor oil and the like used usually in a rubber industry.

The process oil and liquid polymer are not limited particularly, and process oils having been used for rubber products such as tires can be contained. When at least one of process oil and liquid polymer is contained, a content thereof based on 100 parts by mass of the rubber component is preferably not less than 4 parts by mass, more preferably not less than 9 parts by mass, further preferably not less than 10 parts by mass for the reason that excessive adhesion of the rubber composition due to low density compounding is inhibited and an effect of the present invention can be exhibited more. On the other hand, the content of the resin is preferably not more than 100 parts by mass, more preferably not more than 90 parts by mass from the viewpoint of Hs and durability.

It is preferable that the rubber composition comprises the resin having a softening point of 130°C or lower and at least one of a process oil and a liquid polymer, and a total content of the resin having a softening point of 130°C or lower, a process oil and a liquid polymer is not less than 10 parts by mass. Thus, excessive adhesion is inhibited and an effect of the present invention can be exhibited more.

When the rubber composition comprises the resin having a softening point of 130°C or lower, a process oil and a liquid polymer, the total content thereof is preferably not less than 10 parts by mass, more preferably not less than 12 parts by mass for the reason that excessive adhesion of the rubber composition due to low density compounding is inhibited and an effect of the present invention can be exhibited more. On the other hand, the total content thereof is preferably not more than 100 parts by mass, more preferably not more than 90 parts by mass from the viewpoint of Hs and durability.

A reinforcing filler is not limited particularly, and examples thereof include a white filler and carbon black.

Examples of the white filler include silica, aluminum hydroxide, alumina (aluminum oxide), calcium carbonate, talc and the like, and these white fillers can be used alone or can be used in combination of two or more thereof. It is preferable to contain at least one of silica and aluminum hydroxide for the reason that durability and fuel efficiency are good.

The average particle size (D50) of aluminum hydroxide is preferably 0.1 µm or more, more preferably 0.2 µm or more, further preferably 0.3 µm or more from the viewpoint of dispersibility of aluminum hydroxide, prevention of re-agglomeration and abrasion resistance. The average particle size (D50) of aluminum hydroxide is preferably 3.0 µm or less, more preferably 2.0 µm from the viewpoint of durability. The average particle size (D50) as used herein refers to a particle size at a cumulative mass percentage of 50% in a particle-size distribution curve determined by a particle diameter distribution measurement apparatus.

When the rubber composition comprises an aluminum hydroxide, the content of thereof is preferably 1 part by mass or more, more preferably 2 parts by mass or more, further preferably 5 parts by mass or more based on 100 parts by mass of the rubber component from the viewpoint of durability. On the other hand, the content of aluminum hydroxide is preferably 50 parts by mass or less, more preferably 45 parts by mass or less, further more preferably 40 parts by mass or less from the viewpoint of durability.

The nitrogen adsorption specific surface area (N₂SA) of the carbon black is preferably 80 m²/g or more, preferably 100 m²/g or more, more preferably 140 m²/g or more, further preferably 151 m²/g or more, particularly preferably 195 m²/g or more from the viewpoint of durability. Moreover, N₂SA is preferably 600 m²/g or less, more preferably 500 m²/g or less, further preferably 400 m²/g or less, from the viewpoint of ensuring satisfactory filler dispersibility. It is noted that a N₂SA of the carbon black can be determined by a BET method in accordance with JIS K 6217-2: 2001.

The content of carbon black is 3 parts by mass or more based on 100 parts by mass of the rubber component for the reason of ensuring ultraviolet crack prevention performance. The preferred carbon black content varies depending on the performance expected for the rubber composition. The content of carbon black is preferably from 20 to 70 parts by mass based on 100 parts by mass of the rubber component.

Examples of the vulcanizing agent include sulfur such as powder sulfur, precipitated sulfur, colloidal sulfur, surface-treated sulfur and insoluble sulfur. A content of the vulcanizing agent is not limited particularly as long as an effect of the present invention is not impaired, and is a content usually used in a rubber composition.

Examples of the vulcanization accelerator include benzothiazole-based vulcanization accelerators benzothiazolyl sulfenamide-based vulcanization accelerators, benzothiazolyl sulfenimide-based vulcanization accelerators, guanidine-based vulcanization accelerators and the like. These vulcanization accelerators may be used alone, or may be used in combination of two or more thereof.

When the rubber composition comprises a vulcanization accelerator, the content thereof is preferably 0.5 part by mass or more, more preferably 1.5 parts by mass or more based on 100 parts by mass of the rubber component from a point that vulcanization rate is appropriate and vulcanization can be done sufficiently. On the other hand, the content of the vulcanization accelerator is preferably 4.0 parts by mass or less, more preferably 3.0 parts by mass or less based on 100 parts by mass of the rubber component since a vulcanization rate is sufficient and scorching is hardly generated.

For example, zinc oxide can be compounded as a vulcanization accelerator. A content of zinc oxide is not limited particularly, and is preferably not less than 4 parts by mass, more preferably not less than 6 parts by mass, further preferably not less than 7 parts by mass; and preferably not more than 12 parts by mass, more preferably not more than 10 parts by mass, further preferably not more than 9 parts by mass based on 100 parts by mass of the rubber component.

An average primary particle size of zinc oxide is not limited particularly, and is preferably not more than 200 nm, more preferably not more than 150 nm, further preferably not more than 120 nm, particularly preferably not more than 90 nm.

An average primary particle size of zinc oxide is not limited particularly, and is preferably not less than 20 nm, more preferably not less than 50 nm. It is noted that the average primary particle size of the zinc oxide stands for an average particle size (average primary particle size) calibrated with a specific surface area measured by a BET method by nitrogen adsorption.

The rubber composition according to the embodiment of the present disclosure can be manufactured by general methods. For example, the rubber composition can be manufactured by a method that involves kneading respective components, other than a vulcanizing agent and a vulcanization accelerator, with a known kneading machine commonly used in the rubber industry, such as a Banbury mixer, a kneader, or an open roll; then adding the vulcanizing agent and the vulcanization accelerator thereto, followed by further kneading a mixture; and subsequently vulcanizing the kneaded mixture.

The rubber composition according to the embodiment of the present disclosure is preferably used as a rubber composition for a bladder and a rubber composition for interior members of a tire such as an innerliner and a wing since the tire has durability.

A bladder produced using the rubber composition according to the embodiment of the present disclosure can be produced by a usual method. Namely, the bladder can be produced by subjecting the un-vulcanized rubber composition prepared by compounding the above-mentioned additives with the rubber component according to necessity, to extrusion molding to a shape of a bladder with an extruder, and then crosslinking.

A tire produced using the rubber composition for an interior member of a tire can be produced by a usual method. Namely, the tire can be produced by subjecting the un-vulcanized rubber composition prepared by compounding the above-mentioned additives with the rubber component according to necessity, to extrusion processing to a shape of an interior member of a tire, and then laminating together with other tire members on a tire building machine and forming by a usual forming method, thus forming an unvulcanized tire, and heating and compressing this unvulcanized tire in a vulcanizer.

As mentioned above, in the embodiment of the present disclosure, the following [1] to [12] are provided.
[1] A rubber composition comprising: 0.1 to 10 parts by mass of ω-9 fatty acid amide and/or stearamide and 0.1 to 100 parts by mass of a resin based on 100 parts by mass of a rubber component comprising not less than 80% by mass of a butyl rubber, wherein the rubber composition comprises the ω-9 fatty acid amide and/or stearamide as a mixture of 20 to 80% by mass of ω-9 fatty acid amide and/or stearamide and 20 to 80% by mass of a metal salt of stearic acid or hydroxystearic acid.
[2] A rubber composition comprising 0.1 to 10 parts by mass of ω-9 fatty acid amide and 0.1 to 100 parts by mass of a resin based on 100 parts by mass of a rubber component comprising not less than 80% by mass of a butyl rubber, wherein the rubber composition comprises the ω-9 fatty acid amide as a molten mixture of 20 to 80% by mass of ω-9 fatty acid amide and 20 to 80% by mass of calcium stearate.
[3] The rubber composition of above [1] or [2], wherein the butyl rubber is a non-halogenated butyl rubber (IIR).
[4] The rubber composition of any one of above [1] to [3], wherein the ω-9 fatty acid amide is oleamide or erucamide.
[5] The rubber composition of any one of above [1] to [4], wherein the metal salt of stearic acid or hydroxystearic acid is calcium stearate, calcium hydroxystearate, aluminum stearate, magnesium stearate, sodium stearate or zinc stearate.
[6] The rubber composition of any one of above [1] to [5], wherein the resin is at least one selected from the group consisting of an adhesive resin, a compatible resin and a crosslinking resin.
[7] The rubber composition of any one of above [1] to [6], wherein the adhesive resin is at least one selected from the group consisting of a phenolic resin, a coumarone-indene resin, a terpene resin and an acrylic resin.
[8] The rubber composition of any one of above [1] to [7], comprising a resin having a softening point of 130°C or lower.
[9] The rubber composition of any one of above [1] to [8], comprising a resin having a softening point of 130°C or lower and at least one of a process oil and a liquid polymer, wherein a total content of the resin having a softening point of 130°C or lower, the process oil and the liquid polymer is not less than 10 parts by mass.
[10] The rubber composition of any one of above [1] to [9], comprising not less than 4 parts by mass of a process oil.
[11] A bladder for vulcanization of a tire or molding of a tire, the bladder composed of the rubber composition of any one of above [1] to [10].
[12] An interior member of a tire composed of the rubber composition of any one of above [1] to [10].

### EXAMPLE

The present invention will be described based on Examples, but the present invention is not limited thereto only.

A variety of chemicals used in Examples and Comparative Examples will be explained below.

Oleamide: ALFLOW E-10 (transparent melting point: 74°C) manufactured by NOF CORPORATION
Calcium stearate: CALCIUM STEARATE G (transparent melting point: 154°C) manufactured by NOF CORPORATION
Calcium 12-hydroxystearate: Calcium Castor Stearate (transparent melting point: 152°C) manufactured by NOF CORPORATION
Stearamide: ALFLOW S-10 (transparent melting point: 103°C) manufactured by NOF CORPORATION
Erucamide: ALFLOW P-10 (transparent melting point: 82°C) manufactured by NOF CORPORATION
IIR: BUTYL268 (isoprene content: 1.70 mole %, non-halogenated butyl rubber) available from Exxon Mobil Corporation
CR: Neoprene W manufactured by SHOWA DENKO K.K.
Carbon black: SHOBLACK N220 available from Cabot Japan K.K. (N₂SA: 114 m²/g)
Adhesive resin: CLEARON P85 (hydrogenated polyterpene resin,
softening point: 85°C, Tg: 43°C) manufactured by Yasuhara Chemical Co., Ltd.
Compatible resin: 40MS available from Struktol GmbH (styrene-ethylene-propylene copolymer resin, softening point: 102°C, Tg: 62°C)
Castor oil: Industrial castor oil No. 1 manufactured by ITOH OIL CHEMICALS CO., LTD.
Process oil: Diana Process Oil AH-24 manufactured by Idemitsu Kosan Co., Ltd.
Liquid polymer: L-SBR820 (Liquid SBR, Mw: 10,000) manufactured by KURARAY CO., LTD.
Stearic acid: Tsubaki manufactured by NOF CORPORATION
Mold release agent 1: EF44 (fatty acid zinc, transparent melting point: 103°C) available from Struktol GmbH
Mold release agent 2: WB16 (a mixture of fatty acid calcium salt, fatty acid monoethanol amide and an ester of fatty acid monoethanol amide, transparent melting point: 101°C) available from Struktol GmbH
Antioxidant 1: ANTAGE W-500 (2,2'-methylene-bis-(4-ethyl-6-tert-butylphenol)) manufactured by Kawaguchi Chemical Industry Co., Ltd.
Zinc oxide: Zinc Oxide Class 2 manufactured by Mitsui Mining & Smelting Co., Ltd.
Crosslinking resin: TACKIROL 201 (alkylphenol-formaldehyde resin, softening point: 78 - 93°C) manufactured by Taoka Chemical Co., Ltd.

### Preparation of simple mixtures at normal temperature

Amides and fatty acid metal salts shown in Table 1 were prepared separately (powder of 0.5 mm or less diameter) and mixed at normal temperature.

**Table 1**

| | Simple mixture | | | | | | | | |
|---|---|---|---|---|---|---|---|---|---|
| | 1 | 2 | 3 | 4 | 5 | 6 | 7 | 8 | 9 |
| Compounding amount (% by mass) | | | | | | | | | |
| Oleamide | - | 10 | 25 | 50 | 75 | 100 | 50 | - | - |
| Calcium stearate | 100 | 90 | 75 | 50 | 25 | - | - | 50 | 50 |
| Calcium 12-hydroxystearate | - | - | - | - | - | - | 50 | - | - |
| Stearamide | - | - | - | - | - | - | - | 50 | - |
| Erucamide | - | - | - | - | - | - | - | - | 50 |

### Examples and Comparative Examples

According to compounding formulations shown in Tables 2, chemicals except sulfur and a vulcanization accelerator were kneaded with a 1.7-liter Banbury mixer at a discharge temperature of 160°C for 5 minutes to obtain a kneaded product. Further, the obtained kneaded product was kneaded again with the 1.7-liter Banbury mixer at a discharge temperature of 150°C for four minutes (re-milling). Subsequently by using a biaxial open roll, sulfur and a vulcanization accelerator were added to the obtained kneaded product, and a mixture was kneaded for four minutes until a temperature of the mixture became 105°C to obtain an unvulcanized rubber composition. The obtained unvulcanized rubber composition was subjected to press-vulcanization at 190°C for 20 minutes to produce a test rubber composition. The following evaluations were made using the obtained unvulcanized rubber compositions and test rubber compositions. The results of the evaluations are shown in Table 2.

### Index of viscosity

A Mooney viscosity (ML₁₊₄) of each of the unvulcanized rubber compositions after the re-milling was determined under the temperature condition of 130°C according to JIS K 6300-1 "Unvulcanized rubber - Physical properties - Part. 1: Method for measuring viscosity and scorch time using a Mooney viscometer". The result is shown by an index, assuming an inverse number of a Mooney viscosity of Comparative Example 1 to be 100. The larger the index is, the lower the Mooney viscosity is. A performance target value is 100 or more.

### Index of mold release characteristics

A degree of adhesion of the unvulcanized rubber composition onto a rotor metal and a mixer inner wall after kneading with a 1.7-liter Banbury mixer was evaluated visually and with a peeling time. The result is shown by an index, assuming release characteristics of Comparative Example 1 to be 100. The larger the index is, the lower the release characteristics is. A performance target value is 105 or more.

### Index of durability

A No.3 dumbbell type test piece was produced from each test rubber composition according to JIS K 6251, and a tensile test was carried out. An elongation at break (EB) was measured and shown by an index, assuming a value of Comparative Example 1 to be 100. The larger index shows the higher rubber strength and the better durability.

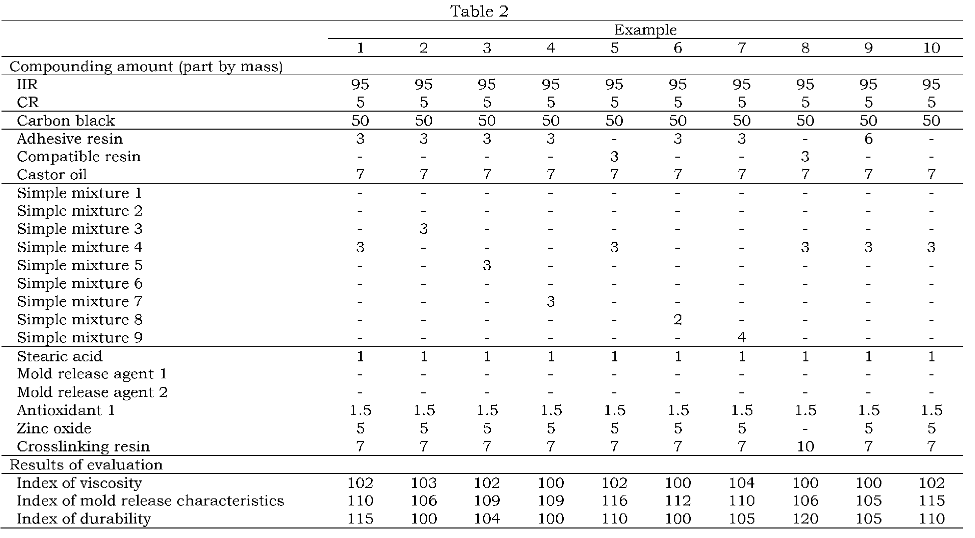

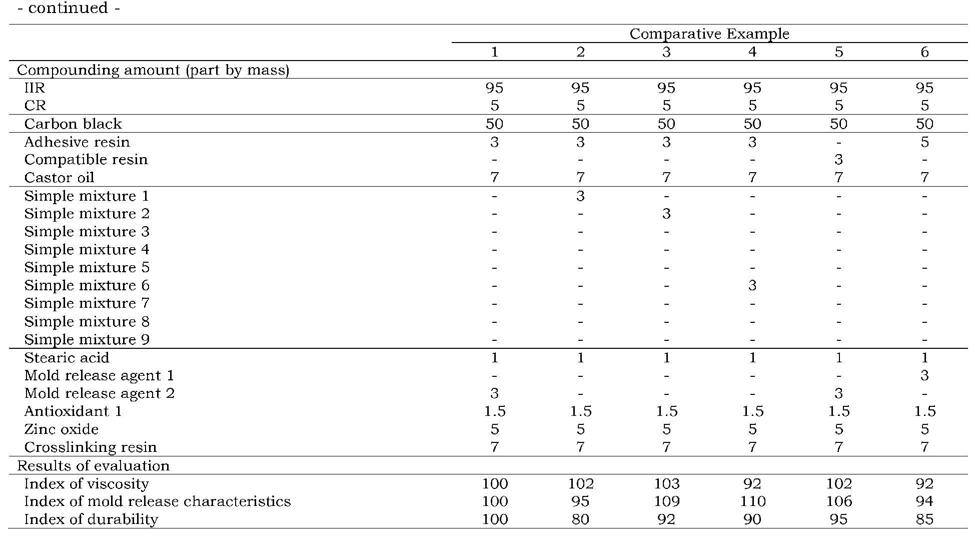

From the results shown in Table 2, it is seen that the rubber composition comprising 0.1 to 10 parts by mass of ω-9 fatty acid amide or stearamide and 0.1 to 100 parts by mass of a resin based on 100 parts by mass of a rubber component, wherein the rubber composition comprises the ω-9 fatty acid amide or stearamide as a mixture of 20 to 80% by mass of ω-9 fatty acid amide or stearamide and 20 to 80% by mass of a metal salt of stearic acid or hydroxystearic acid and comprises not less than 80% by mass of a butyl rubber, is good in processability, mold release characteristics and durability.

### INDUSTRIAL APPLICABILITY

The rubber composition of the present invention comprising predetermined amounts of ω-9 fatty acid amide and/or stearamide and a resin based on 100 parts by mass of a rubber component comprising not less than 80% by mass of a butyl rubber is good in processability, mold release characteristics and durability.

## Claims

1. A rubber composition comprising:
0.1 to 10 parts by mass of ω-9 fatty acid amide and/or stearamide and
0.1 to 100 parts by mass of a resin
based on 100 parts by mass of a rubber component comprising not less than 80% by mass of a butyl rubber,
wherein the rubber composition comprises the ω-9 fatty acid amide and/or stearamide as a mixture of 20 to 80% by mass of ω-9 fatty acid amide and/or stearamide and 20 to 80% by mass of a metal salt of stearic acid or hydroxystearic acid.

2. The rubber composition of claim 1, wherein the resin is at least one selected from the group consisting of an adhesive resin, a compatible resin and a crosslinking resin.

3. The rubber composition of claim 1 or 2, comprising
a resin having a softening point of 130°C or lower and
at least one of a process oil and a liquid polymer,
wherein a total content of the resin having a softening point of 130°C or lower, the process oil and the liquid polymer is not less than 10 parts by mass.

4. The rubber composition of any one of claims 1 to 3, comprising not less than 4 parts by mass of the process oil.

5. A bladder for vulcanization of a tire or molding of a tire, the bladder composed of the rubber composition of any one of claims 1 to 4.

6. An interior member of a tire composed of the rubber composition of any one of claims 1 to 4.
